Europäisches Patentamt

European Patent Office

Office européen des brevets

(19)

(11) Numéro de publication: **0 000 529**
**B1**

(12) **FASCICULE DE BREVET EUROPEEN**

(45) Date de publication du fascicule de brevet: 10.06.81

(51) Int. Cl.³: **G 02 B 5/14**

(21) Numéro de dépôt: **78100414.8**

(22) Date de dépôt: **18.07.78**

(54) **Dispositif de couplage pour fibre optique.**

(30) Priorité: 25.07.77 FR 7722716

(43) Date de publication de la demande:
07.02.79 Bulletin 79/3

(45) Mention de la délivrance du brevet:
10.06.81 Bulletin 81/23

(84) Etats Contractants Désignés:
BE CH DE FR GB NL SE

(56) Documents cités:
FR - A - 2 334 125
US - A - 4 021 099

(73) Titulaire: **COMPAGNIE GENERALE D'ELECTRICITE**
**Société anonyme dite:**
**54, rue La Boétie**
**F-75382 Paris Cedex 08 (FR)**

(72) Inventeur: Jeunhomme, Luc
43, avenue Lénine
F-94110 Arcueil (FR)
Inventeur: Pocholle, Jean-Paul
Parc des Lierres - Bât D - 16 rue des fermes
F-91700 Ste Genevieve des Bois (FR)

(74) Mandataire: Weinmiller, Jürgen
Zeppelinstrasse 63
D-8000 München 80 (DE)

Courier Press, Leamington Spa, England.

## Dispositif de couplage pour fibre optique

L'invention concerne un dispositif de couplage pour fibre optique.

On sait qu'une fibre optique est constituée d'un coeur d'indice optique N entouré par une gaine d'indice n plus petit que N et permet de guider dans le coeur une lumière qui peut par exemple être modulée à des fins de télécommunication. Il y a alors intérêt à disposer d'un dispositif de couplage permettant, sans interrompre la fibre optique, soit d'introduire de la lumière dans la fibre, soit de dériver une fraction de la lumière qu'elle guide pour pouvoir par exemple disposer, au voisinage du point de dérivation, de l'information que la fibre transporte plus loin. Malgré ce besoin évident aucun dispositif de ce genre vraiment efficace a été proposé. Un tel dispositif doit notamment s'appliquer aux fibres multimodes. Ces fibres sont celles dans le coeur desquelles la lumière peut se propager selon plusieurs modes distincts. Ce sont les seules dont l'utilisation industrielle soit pratiquement envisagée en raison de leur diamètre relativement grand (0,15 mm par exemple avec la gaine). Le diamètre d du coeur vérifie la relation d.f. racine de $(N^2-n^2)$ supérieur à 0,7656.c, f étant la fréquence de la lumière utilisée et c la vitesse de propagation de la lumière dans le vide.

Un dispositif de couplage connu est décrit dans la publication US—A—3 931 518 (Miller) et dans la publication FR—A—2 334 125 (Compagnie Générale d'Electricité). Selon ces publications, dans le but d'extraire de la lumière, on réalise préalablement un couplage entre des modes à forte constante de propagation se propageant dans le coeur et des modes à faible constante de propagation qui ne peuvent se propager que dans la gaine.

Le changement de constante de propaga-tion est obtenu en induisant des courbures alternées dans la fibre à l'aide de deux réseaux constitués par deux successions régulières de creux et de saillies gravés dans deux blocs, les saillies d'un réseau étant en regard des creux de l'autre. On sait en effet (Bell System Technical Journal 52, 1973, page 817) que, lorsque la position de l'axe de la fibre, sa courbure, l'indice ou le diamètre du coeur subissent des fluctuations le long de l'axe de propagation, il y a échange d'énergie entre différents modes correspondant à différentes valeurs de la constante de propagation K.

Plus précisément, si le défaut ainsi introduit est sinusoïdal avec une fréquence spatiale P en radians par unité de longueur, l'échange d'énergie se fait entre deux modes de constante de propagation K1 et K2 tels que, K1 — K2 = P, cet échange pouvant se faire dans les deux sens (W. J. Stewart: "Mode Conversion due to periodic distortions of the fiber axis" Optical Fibre Communications Conference, 16 au 18 Septembre 1975).

Les limites supérieure KM et inférieure Km de la constante de propagation K des modes susceptibles de subsister dans le coeur sont données par les relations:

c. KM = 6,283. f.N.

c. Km = 6,283. f.n,

c étant la vitesse de la lumière dans le vide et f la fréquence de la lumière utilisée. La dérivation d'une fraction significative de l'énergie transportée résulte d'une part du fait que l'amplitude de la déformation induite dans la fibre est suffisamment importante et d'autre part du fait que la succession des courbures alternées induit, dans la lumière se propageant dans le coeur de la fibre, une succession de transpositions de mode en nombre suffisant pour obtenir une valeur finale de constante de propagation au-dessous de la limite inférieure de propagation dans le coeur. La lumière dont la constante de propagation a été ainsi diminuée se propage désormais dans la gaine. Elle peut être aisément extraite de celle-ci grâce à un "adaptateur d'indice", constitué par un milieu transparent d'indice optique au moins sensiblement égal à celui de la gaine et en contact optique avec la surface extérieure de celle-ci. L'indice de l'adaptateur ne doit pas descendre au-dessous de 0,8 fois celui de la gaine. Cet adaptateur est constitué, dans le brevet Miller précédemment cité, par le disque de couplage (coupling disk) 18. La lumière ayant pénétré dans l'adaptateur est transmise par celui-ci à un dispositif d'utilisation, tel qu'une diode photodétectrice.

Un autre dispositif d'extraction de la lumière d'une fibre est décrit dans une communication de C. et W. J. Stewart "Directional coupler for single multimode optical fibre" au "deuxième colloque européen sur les transmissions par fibres optiques", Paris, 27—30 Septembre 1976 et publiée par le "Comité du colloque international sur les transmissions par fibres optiques", 11 rue Hamelin 75783 PARIS Cédex 16 (Cables and connections, Part 2, p 267—268).

Dans ce dispositif, l'adaptateur d'indice est constitué par une plaque mince d'un materiau transparent dont un bord porte une ondulation constituant un réseau ("grating") et est appliqué contre la fibre de manière à assurer une déformation périodique de celle-ci. Le contact optique entre ce bord et la gaine de la fibre permet à la lumière de passer dans cette plaque mince, dans laquelle elle se dirige vers un bord incurvé qui la réfléchit et la focalise sur un détecteur placé au contact d'un autre bord.

Ces divers dispositifs d'extraction de lumière présentent l'inconvénient de n'envoyer sur l'organe d'utilisation (détecteur) qu'une petite fraction de la lumière circulant dans la fibre. Cette fraction est celle qui sort dans un demi plan partant de l'axe de la fibre, ou plus exactement dans le petit angle dièdre formé par deux demi plans partant de l'axe de la fibre et très voisins l'un de l'autre. Dans le cas du dispositif décrit dans le brevet Miller, le plan de sortie de la lumière est un plan passant par l'axe de la fibre et perpendiculaire à la surface du disque de couplage 18. Dans le cas du dispositif décrit dans l'article de Stewart, le plan de sortie de la lumière est celui de la plaque mince. Un autre dispositif pour extraire de la lumière de la fibre est décrit dans la publication US—A—4 021 099 (Kawasaki et al). Il utilise un système focalisant comportant un miroir et éventuellement une lentille et présente l'inconvénient d'obliger à couper la fibre.

Ce même dispositif permet aussi d'introduire de la lumière dans la fibre. Or on souhaite généralement introduire dans la fibre un fraction aussi importante que possible de la lumière produite par une diode électroluminescente (LED). Il apparaît alors que le rendement d'un tel dispositif d'introduction de lumière est très mauvais car la diode émet la lumière à partir d'une surface émettrice qui n'est pas petite, et dans un angle solide qui est grand. Si on utilise, par exemple une lentille qui reçoit toute la lumière émise par la diode, et qui la concentre toute sur la surface de la section du coeur de la fibre, la plus grande partie de cette lumière fait avec l'axe de la fibre un angle beaucoup trop grand pour que cette lumière puisse se propager dans la fibre. Aucun système optique classique ne permet d'éviter cet inconvénient, en raison d'une loi connue de l'optique, appelée parfois "théorème de conservation de l'étendue géométrique d'un faisceau". Cette loi dit qu'aucun système optique ne peut, sans perte de lumière, diminuer le produit de l'angle solide de divergence d'un faisceau par l'aire de la section de ce faisceau. Cette loi est notamment exprimée dans le livre "Principle of Optics" de M. Born et E. Wolf (3ème édition, Pergamon Press, p. 120, equation 54). Compte tenu des caractéristiques des diodes électroluminescentes connues, il en résulte que le rendement d'introduction de leur lumière dans une fibre est toujours mauvais. Le rendement d'introduction de la lumière dans la fibre peut être augmenté considérablement si on utilise la lumière d'un laser, qui présente une divergence très faible. Mais d'autres inconvénients apparaissent alors tels que le prix du laser, son encombrement, etc...

Ces dispositifs connus d'introduction de lumière présentent de plus l'inconvénient d'obliger à couper la fibre.

La présente invention a pour but la réalisation d'un dispositif de couplage pour fibre optique permettant d'obtenir un bon rendement de couplage, notamment pour le couplage avec une diode électroluminescente émettant de la lumière dans un grand angle solide, sans obliger à couper la fibre optique.

Elle a pour objet un dispositif de couplage pour fibre optique, applicable à une fibre optique constituée d'un coeur entouré par une gaine d'indice optique plus petit, ce dispositif comportant

— des moyens de couplage de modes créant des courbures alternées dans une portion de la fibre et donnant ainsi à cette portion une forme ondulée oscillant autour d'un axe moyen, de manière à coupler des modes à fortes constantes de propagation se propageant dans le coeur avec des modes à faibles constantes de propagation se propageant dans la gaine,

— et un adaptateur d'indice constitué d'un milieu transparent dont l'indice n'est pas sensiblement inférieur à celui de la gaine, en contact optique avec la gaine, de manière à coupler lesdits modes se propageant dans la gaine avec de la lumière se propageant dans ce milieu transparent et constituant un ensemble de rayons, les rayons de cet ensemble passant près de l'axe de la fibre avec un écart inférieur au rayon de ladite fibre, et cela sur toute la longueur d'un segment de cet axe, ce segment se trouvant à l'intérieur de l'adaptateur, les rayons faisant tous un même angle prédéterminé avec cet axe, caractérisé par le fait qu'une surface optique de cet adaptateur d'indice présente une forme en pointe de révolution autour de cet axe, pour assurer un couplage entre cet ensemble de rayons et un faisceau lumineux parallèle à cet axe ou convergent en un point aligné sur cet axe.

A l'aide des figures schématiques 1 à 7 ci-jointes, on va décrire ci-après, à titre non limitatif, comment l'invention peut être mise en oeuvre. Les éléments qui se correspondent sur plusieurs de ces figures y sont désignés par les mêmes signes de référence. Les trajets des rayons lumineux sont représentés sur ces figures par des traits tiretés, avec des flèches montrant le sens de propagation de la lumière.

La figure 1 représente un dispositif selon l'invention vu en coupe par un plan passant par son axe, les moyens de couplage entre l'intérieur et l'extérieur de la fibre n'étant pas représenté.

La fig. 2 représente une vue du dispositif de la figure 1 en coupe par un plan perpendiculaire à son axe.

La figure 3 représente une vue en coupe d'un dispositif d'injection de lumière dans une fibre optique, le plan de coupe passant par l'axe de ce dispositif.

La figure 4 représente une vue du dispositif de la figure 3 en coupe par un plan perpendiculaire à son axe.

La figure 5 représente, en traits forts une vue d'un dispositif de couplage selon l'invention en coupe par un plan passant par son axe. Sur cette figure des traits fins représentent diverses droites et une hyperbole que l'on peut tracer dans le plan de coupe pour permettre de mieux comprendre la forme de la surface optique du dispositif.

La figure 6 représente une vue d'un dispositif d'extraction de lumière selon l'invention, avec utilisation d'une surface optique réfléchissante, ce dispositif étant coupé par un plan passant par son axe.

La figure 7 représente une vue d'un dispositif d'injection et d'extraction de lumière selon l'invention, en coupe par un plan passant par son axe.

Sur ces diverses figures, ce dispositif présente un axe 2, représenté en traits mixtes, cet axe étant aussi celui d'une portion de fibre optique rectiligne et/ou l'axe moyen d'une portion de fibre ondulée;

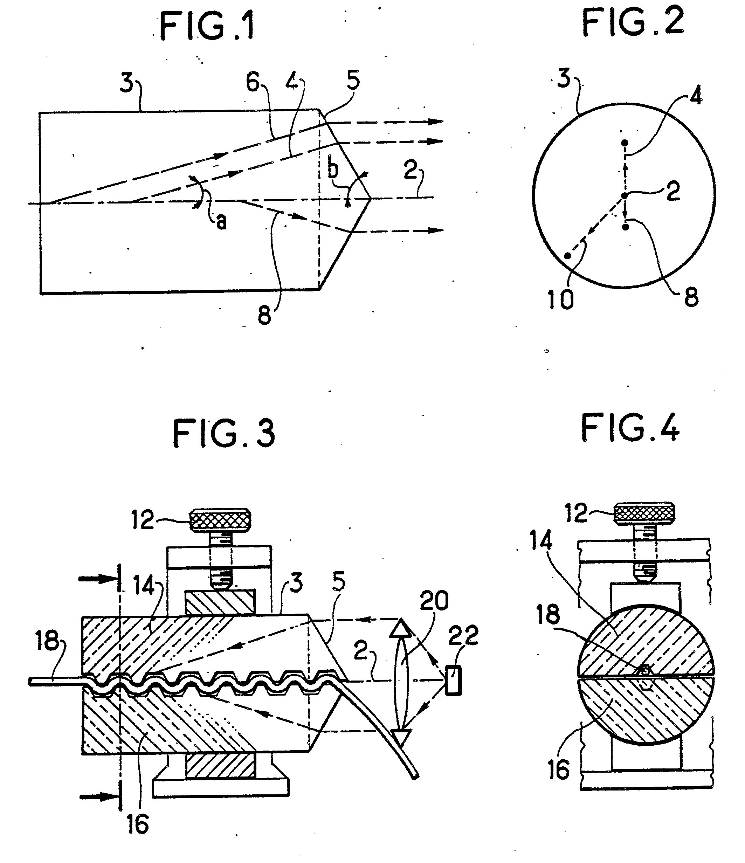

Il a été indiqué ci-dessus que l'invention utilise des moyens de couplage entre l'intérieur et l'extérieur de la fibre Dans le cas où l'invention s'applique à une fibre optique constituée d'un coeur entouré d'une gaine d'indice optique plus petit, ces moyens de couplage peuvent avantageusement comporter des moyens de couplage de modes propres à créer des courbures alternées dans une portion de la fibre et donner ainsi à cette portion une forme ondulée oscillant autour d'un axe moyen. Ceci permet de coupler des modes à fortes constantes de propagation se propageant dans le coeur avec des modes à faibles constantes de propagation se propageant dans le gaine. Ces moyens de couplage de modes sont associés à un adaptateur d'indice 3 (Fig. 1 et 2) constitué d'un milieu transparent dont l'indice n'est pas sensiblement inférieur à celui de la gaine. Cet adaptateur permet de coupler les modes se propageant dans la gaine avec de la lumière se propageant dans ce milieu transparent et constituant ledit ensemble de rayons.

Ladite surface optique est alors constituée par une surface 5 de cet adaptateur d'indice. Sur les figures 1 et 2, la fibre optique est représentée par un simple trait selon l'axe 2. L'adaptateur d'indice a la forme d'un cylindre plein, de révolution autour de l'axe 2 et entourant donc la fibre. Ce cylindre plein se termine à une extrémité par ·un cône de révolution autour du même axe et formant une pointe vers l'extérieur. C'est la surface de ce cône qui constitue ladite surface optique.

Les moyens de couplage de modes qui viennent d'être indiqués ne sont pas représentés sur les figures 1 et 2. Ils sont analogues aux dispositions décrites dans le brevet Miller précédemment mentionné. Il a été cependant trouvé, selon la présente invention, que l'on pouvait avantageusement utiliser une propriété, peu exploitée antérieurement, de la lumière qui se propageait dans l'adaptateur d'indice soit en sortant de la gaine, soit, réciproquement, en étant capable d'y pénétrer pour y former les modes précédemment mentionnés. Cette propriété est que ces rayons lumineux forment sensiblement tous un même angle avec l'axe de la fibre. Ils constituent donc un ensemble de rayons d'un type particulier, comportant par exemple les rayons 4,6 8 et 10 des figures 1 et 2. Cet ensemble est différent d'un faisceau parallèle parce que les rayons sont situés dans divers plans passant par l'axe. Cet ensemble est d'autre part différent d'un faisceau convergent sur l'axe parce qu'il comporte des rayons passant par divers points de l'axe.

En fait, les rayons de cet ensemble ne passent pas exactement par l'axe, mais seulement à proximité de celui-ci. Il y a donc un écart entre les rayons réels et ceux d'un ensemble de rayons passant exactement par l'axe. Cet écart est inférieur au rayon de la fibre et n'a pas d'importance pour l'utilisation de la lumière lorsqu'on considère ce qui se passe à une distance de la fibre nettement supérieure à son diamètre. C'est pourquoi, la surface optique précédemment mentionnée s'étend de préférence jusqu'à une distance de la fibre supérieure à dix fois son diamètre, de manière que les rayons arrivant par cette surface soient, au moins en majorité, défléchis par cette surface pratiquement de la même manière que si leur prolongement rencontrait exactement l'axe 2.

Il doit d'autre part être remarqué que la propriété utile précédemment mentionnée existe même lorsque la fibre présente une forme ondulée oscillant autour d'un axe moyen rectiligne. Dans ce cas, c'est cet axe moyen qui constitue l'axe 2.

Il doit enfin être remarqué que l'angle (a) (fig. 1) que les rayons de cet ensemble font avec l'axe 2 n'est pas parfaitement prédéterminé. Il peut par exemple subir une variation de 1,5° en plus ou en moins. Cette variation est un peu gênante pour la mise en oeuvre de l'invention. Mais elle est d'autant plus faible que l'indice du matériau constituant l'adaptateur est plus élevé. C'est pourquoi, cet indice est choisi de préférence non seulement au moins égal à celui de la gaine de la fibre, ce qui est à peu près nécessaire pour permettre un couplage entre la lumière se propageant dans l'adaptateur et celle des modes se propageant dans la gaine, mais encore au moins égal à l'indice du coeur de la fibre, ce dernier indice étant toujours nettement supérieur à celue de la gaine. Le choix d'un indice élevé pour l'adaptateur présente de plus l'avantage que l'angle (a) en est augmenté, ce qui permet d'éviter une longueur excessive de l'adaptateur. La valeur de cet angle en radians est approximativement donné par la formule

$$a^2 = n^2/n_1^2 - 1$$

(n) étant l'indice de l'adaptateur 3 et (n₁) étant l'indice du coeur de la fibre.

La surface représentée sur la figure 1 est un dioptre, c'est-à-dire qu'elle sépare deux milieux d'indices différents, celui de l'adaptateur (n) et celui de l'air et qu'elle est traversée par la lumière. Pour assurer le couplage entre l'ensemble des rayons se propageant dans l'adaptateur en formant l'angle (a) avec l'axe 2, et un faisceau extérieur parallèle á l'axe 2, il faut alors donner à cette surface la forme d'un cône ayant un demi-angle au sommet (b), tel que

$$tg\ b = (\cos a - 1/n)/\sin a$$

Les moyens de couplage de modes précédemment mentionnés sont représentés sur les figures 3 et suivantes, sur lesquelles la fibre optique est représentée avec un diamètre fortement grosse et avec des déformations exagérées, de manière à faciliter la compréhension du dessin. Ces moyens sont notamment étudiés dans une conférence de L. Jeunhomme et J. P. Pocholle "T Coupler for multimode optical fiber", (North Atlantic Treaty Organization, Advisory Group for Aerospace Research and Development, AGARD, 7 rue Ancelle 92200 NEUILLY SUR SEINE, France). Le compte-rendu de cette conférence peut être obtenu, auprès de l'ONERA 29 avenue de la Division Leclerc, 92 CHATILLON SOUS BAGNEUX, France et du National Technical Information Service (NTIS) 5285 Port Royal Road, Springfield, VIRGINIA 22151, USA.

L'action optique de ces moyens peut être définie part deux grandeurs: le pas P de la succession régulière de courbures alternées, et l'amplitude de la déformation. Cette amplitude est comprise typiquement entre 10 et 100 microns. Le pas de la succession doit être défini de manière plus précise. Si on appelle (r) le rayon du coeur de la fibre, $n_1$ l'indice de ce coeur et $n_2$ celui de la gaine, on peut écrire que la valeur optimale de P varie comme r/2D pour une fibre à échelon d'indice, et comme r/1,41D pour une fibre à gradient d'indice parabolique, avec

$$D^2 = (n_1 - n_2)n_1.$$

Par exemple, pour une fibre typique pour laquelle $D^2 = 6 \times 10^{-3}$ et r = 0,0425 mm, P doit être voisin de 2 mm. En fait, il est apparu que P pouvait être comprise entre 1,4 mm et 4 mm.

Lorsqu'il s'agit de réaliser un dispositif d'extraction de lumière à partir de la fibre, la longueur de la portion ondulée de celle-ci peut être comprise entre 10 et 50 mm environ, et doit être suivie d'une portion longue d'au moins 10 mm en contact optique avec l'adaptateur. Lorsqu'il s'agit d'injecter de la lumière dans la fibre, cette portion ondulée doit être en contact optique avec l'adaptateur d'indice, et sa longueur doit être en principe suffisante pour que tout rayon en provenance de ladite surface optique arrive sur cette portion ondulée, celle-ci devant se prolonger en aval au-delà de la portion éclairée.

Quoique les moyens de couplage de modes indiqués ci-dessus semblent des plus avantageux, d'autres moyens pourraient être utilisés, tels que, par exemple, une succession régulière d'amincissements et d'épaississements du coeur de la fibre.

Les exemples de réalisation qui vont être maintenant décrits utilisent un adaptateur d'indice ayant la forme générale d'un cylindre de révolution plein et constitué d'un verre d'indice n = 1,4859 pour une longueur d'onde lumineuse de 6.328 angstroems. Cet adaptateur pourrait cependant tout aussi bien être constitué d'une matière plastique transparente dure, moulable et d'indice élevé. La fibre optique a un diamètre de coeur de 85 microns, un indice de coeur $n_1 = 1,4645$ et un indice de gaine $n_2 = 1,4565$. L'angle (a) vaut a = 12,6°. Dans les cas où la surface optique est un dioptre, le demi angle au sommet du cône vaut b = 54°29'. L'adaptateur d'indice 3 est constitué de deux parties 14 et 16 ayant chacune en section la forme d'un demi cercle de manière à constituer le cercle complet par rapprochement de ces deux parties avec l'aide d'un moyen de pression tel qu'une vis 12 (Fig. 3). Les faces planes en regard de ces deux parties comportent chacune une succession régulière de saillies et de creux avec un pas P = 2 mm, disposées de manière que les creux d'une succession soient en regard des saillies de l'autre. On donne ainsi à la portion de la fibre 18 serrée entre ces deux parties une forme ondulée. L'ensemble des deux successions de saillies et de creux est souvent appelé "réseau". Le contact optique entre la fibre et l'adaptateur est amélioré par l'utilisation d'une huile transparente appropriée, d'indice intermédiaire entre celui de la gaine et celui de l'adaptateur. Cette huile est retenue par capillarité. Ce peut être par exemple la graisse silicone. Le dispositif d'injection de lumière représenté sur les figures 3 et 4 comporte un adaptateur ayant un diamètre de 26 mm, et une longueur sur l'axe de 75 mm, y compris la partie conique. Cette longueur est entièrement occupée par le réseau. Une lentille convergente à échelons 20 (lentille de Fresnel) est disposée coaxialement à l'adaptateur du côté du cône. Elle a un diamètre de 25,4 mm et une focale de 10 mm. Au foyer de cette lentille au-delà de celle-ci est disposée la surface émettrice d'une diode électroluminescente 22 de type habituel dont le diagramme de rayonnement est proche de la loi de Lambert. La plus grande partie de la lumière émise par cette diode est reçue par la lentille 20, transformée en un faisceau parallèle à l'axe 2, puis transformée par la surface optique conique de l'adaptateur en un ensemble de rayons faisant l'angle convenable avec cet axe et se propageant vers cet axe à l'intérieure de l'adaptateur. Elle rencontre donc la gaine de la fibre dans laquelle elle pénètre et se propage en y formant les modes précédemment mentionnés, qui sont rapidement transformés en modes se propageant dans le coeur grâce aux moyens de couplage de modes constitués par le réseau. La longueur de celui-ci est choisie suffisante pour que cette dernière transformation soit à peu près complète. On obtient ainsi un rendement d'injection élevé. Il n'est pas nécessaire d'interrompre la fibre 18, mais seulement de la courber à l'extérieur de l'adaptateur, pour laisser la place de la lentille 20 qui doit être aussi proche que possible de l'adaptateur.

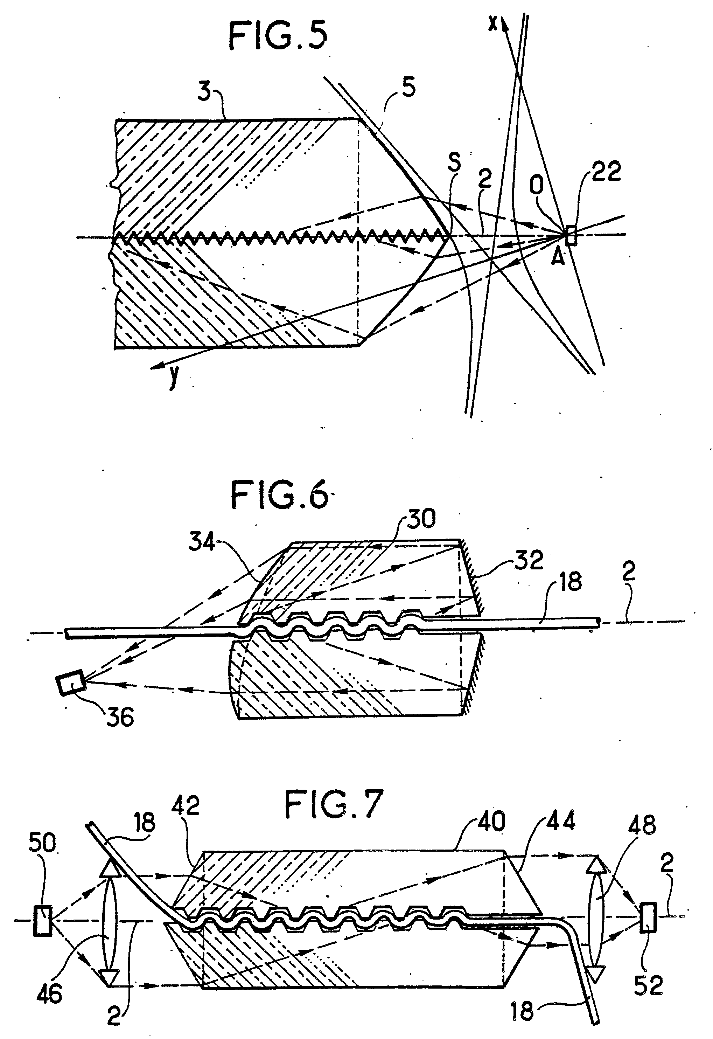

L'utilisation de la lentille 20 peut être évitée en donnant à la surface optique 5 une forme en pointe bombée en conservant la valeur du demi angle au sommet. Une telle disposition est représentée sur la figure 5 qui représente en traits forts des éléments ayant une existence réelle. La forme de la surface optique en pointe n'est alors plus conique et peut être définie comme suit

1 — Elle est de révolution autour de l'axe 2.

2 — Elle conserve le même sommet S que précédemment, qui constitue l'extrémité de la pointe.

3 — Elle conserve la même valeur du demi angle au sommet, c'est-à-dire qu'au sommet elle est tangente au cône précédemment décrit.

4 — Elle est engendrée par la rotation d'un arc d'hyperbole passant par le sommet S et tournant autour de l'axe 2.

5 — Pour préciser la définition, on peut:

. appeler (e) la distance entre ce sommet S et la surface émettrice de la diode 22 et (n) l'indice optique de l'adaptateur 3.

. couper la surface optique par un plan passant par l'axe 2, par exemple le plan de la figure 5,

. tracer dans ce plan un axe Oy passant par le centre O de cette surface émettrice, cet axe Oy étant parallèle à un rayon dudit ensemble de rayons dans l'adaptateur, c'est-à-dire faisant avec l'axe 2 l'angle (a) précédemment défini, et un axe Ox perpendiculaire à Oy,

. considérer, une moitié seulement de la section de la surface optique par ce plan, par exemple celle qui est située au-dessus de l'axe 2 sur la figure 5,

. On peut alors préciser que cette demi section de la surface optique par ce plan est un arc d'une hyperbole définie par l'équation:

$$x^2 + y^2 = (ny + e - ne \cos a)^2$$

On a tracé cette hyperbole sur la figure 5 en traits fins ainsi que ses axes Ox et Oy et ses asymptotes. Il doit cependant être bien compris que ces éléments tracés en traits fins ne peuvent pas être vus sur le dispositif d'injection lui-même. Ils servent seulement à aider à comprendre comment on peut définir la surface optique.

Le dispositif d'extraction de lumière représenté sur la figure 6 comporte un adaptateur d'indice 30 analogue au précédent. Son diamètre est de 30 mm. Il comporte un réseau s'étendant à partir de sa face arrière sur une longueur de 44 mm, et se prolongeant vers l'avant par une zone longue de 16 mm dans laquelle la fibre 18 ne subit pas de déformation, le contact optique étant conservé. Cet adaptateur se termine vers l'avant par une surface optique 32 conique convexe avec un demi angle au sommet égal à

$$90° - 12,6°/2 = 83°,7.$$

Cette surface optique est métallisée de manière que la lumière qui lui parvient à partir de la fibre soit réfléchie dans l'adaptateur en formant un faisceau parallèle à l'axe 2 qui parvient jusqu'à la face avant 34. Cette face avant constitue un dioptre convergent d'un type bien connu des opticiens, et qui permet de faire converger le faisceau sortant de l'adaptateur vers une diode réceptrice 36. Ce dioptre convergent est excentré par rapport à l'axe 2, de manière à permettre de placer la diode 36 en dehors de l'axe 2. Il est ainsi possible non seulement de ne pas couper la fibre 18, mais encore de ne pas la courber en dehors de l'adaptateur.

On vient de décrire à l'aide des figures 3 et 4 un dispositif d'injection de lumière utilisant une surface optique dioptrique, et à l'aide de la figure 6 un dispositif d'extraction de lumière utilisant une surface optique réfléchissant. Il est cependant bien évident que l'on pourrait utiliser une surface optique dioptrique dans un dispositif d'extraction de lumière, et une surface optique réfléchissante dans un dispositif d'injection de lumière.

Il est d'autre part possible, comme représenté sur la figure 7, d'assurer l'injection et l'extraction de lumière avec un seul adaptateur d'indice, comportant un seul réseau, et muni à chacune de ses extrémités avant et arrière d'une surface optique dioptrique, une surface optique d'entrée 42 et une surface optique de sortie 44. Ces surfaces optiques peuvent être coniques. Elles doivent alors être associées chacune à une lentille convergente, respectivement 46 et 48, si on désire réaliser un couplage avec des éléments de petites dimensions, respectivement une diode électroluminescente 50 et une diode réceptrice 52.

**Revendications**

1. Dispositif de couplage pour fibre optique (18), applicable à une fibre optique constituée d'un coeur entouré par une gaine d'indice optique plus petit, ce dispositif comportant
— des moyens de couplage de modes (14,16,12) créant des courbures alternées dans une portion de la fibre et donnant ainsi à cette portion une forme ondulée oscillant autour d'un axe moyen (2), de manière à coupler des modes à fortes constantes de propagation se propageant dans le coeur avec des modes à faibles constantes de propagation se propageant dans la gaine,
— et un adaptateur d'indice (3) constitué d'un milieu transparent dont l'indice n'est pas sensiblement inférieur à celui de la gaine, en contact optique avec la gaine, de manière à coupler lesdits modes se propageant dans la gaine avec de la lumière se propageant dans ce milieu transparent et constituant un ensemble de rayons, les rayons de cet ensemble passant près de l'axe (2) de la fibre avec un écart inférieur au rayon de ladite fibre, et celà sur toute la longueur d'un segment de cet axe, ce segment se trouvant à l'intérieur de l'adaptateur, les rayons faisant tous un même angle prédéterminé avec cet axe, caractérisé par le fait qu'une surface optique (5,32,42,44) de cet adaptateur d'indice présente une forme en pointe de révolution autour de cet axe, pour assurer un couplage entre cet ensemble de rayons et un faisceau lumineux parallèle à cet axe ou convergent en un point aligné sur cet axe.

2. Dispositif selon la revendication 1 caractérisé par le fait que ladite surface optique (5) s'étend jusqu'à une distance de la fibre (18) supérieure à dix fois le diamètre de cette fibre, et ledit adaptateur d'indice (3) présente un indice optique au moins égal à celui du coeur de la fibre.

3. Dispositif selon la revendication 2 caractérisé par le fait que ladite surface optique (5) est un dioptre permettant la réfraction de la lumière.

4. Dispositif selon la revendication 3 caractérisé par le fait que ledit dioptre (5) présente la forme d'un cône de révolution autour dudit axe (2) de manière à assurer une transformation réciproque entre ledit ensemble de rayons et un faisceau de lumière parallèle à cet axe.

5. Dispositif selon la revendication 4 caractérisé par le fait qu'il comporte en outre un système convergent (20) extérieur audit adaptateur d'indice (3) et assurant la focalisation de ce faisceau parallèle en un point (22) extérieur à cet adaptateur.

6. Dispositif selon la revendication 3 caractérisé par le fait que ledit dioptre (5) présente la forme d'une surface de révolution obtenue en faisant tourner un arc d'une hyperbole autour dudit axe (2) de la fibre (18), cette hyperbole étant tracée dans un plan passant par cet axe et présentant un axe de symétrie formant avec ledit axe de la fibre le même angle que les rayons dudit ensemble de rayons, de manière à assurer une transformation réciproque entre cet ensemble de rayons et un faisceau de lumière convergeant en un point aligné sur cet axe de la fibre et sur ledit axe de symétrie de l'hyperbole.

7. Dispositif selon la revendication 2, caractérisé par le fait que ladite surface optique est une surface réfléchissante (32) pour réfléchir la lumière vers l'intérieur de l'adaptateur d'indice (30), et présente la forme d'un cône de révolution autour dudit axe (2) de manière à assurer la transformation réciproque entre ledit ensemble de rayons et un faisceau de lumière parallèle à cet axe et intérieur à cet adaptateur.

8. Dispositif selon la revendication 7 caractérisé par le fait que l'adaptateur présente en outre, sur le trajet dudit faisceau parallèle intérieur, un dioptre convergeant (34) assurant la transformation réciproque entre ce faisceau parallèle intérieur et un faisceau extérieur convergent.

9. Dispositif selon la revendication 8 caractérisé par le fait que ledit dioptre convergent (34) assure la transformation entre le faisceau parallèle intérieur et un faisceau extérieur convergeant en un point (36) à distance de l'axe (2) de la fibre (18).

10. Dispositif selon la revendication 2 caractérisé par le fait que lesdits moyens pour créer des courbures alternées comportent deux réseaux constitués par deux successions régulières de creux et de saillies formées respectivement sur deux surfaces en regard dudit adaptateur d'indice (14,16), les saillies d'un réseau étant en regard des creux de l'autre,
— et des moyens de pression (12) pour appuyer les saillies contre deux côtés opposés de la fibre optique,
— des moyens étant prévus pour assurer un contact optique entre l'adaptateur et la zone ondulée des fibres.

11. Dispositif selon la revendication 10, applicable à l'injection de lumière dans la fibre optique (18) et caractérisé par le fait que ledit réseau s'étend sur toute la longueur de la zone recevant de la lumière à partir de ladite surface optique (42) et se prolonge vers l'aval au delà de cette zone.

12. Dispositif selon la revendication 10 applicable à l'extraction de la lumière à partir de la fibre optique (18) et caractérisé par le fait que ledit adaptateur d'indice (40) comporte une zone supplémentaire de sortie longue d'au moins un centimètre, et permettant un contact optique avec une portion rectiligne de la fibre consécutive à ladite portion ondulée en appui contre ledit réseau, l'axe (2) de cette portion rectiligne formant le prolongement de l'axe moyen (2) de cette portion ondulée, ladite surface optique (44) de révolution autour de cet axe commun étant disposée de manière à recevoir directement la lumière sortant de cette portion rectiligne et d'au moins une partie de cette portion ondulée voisine de cette portion rectiligne.

13. Dispositif selon la revendication 12 caractérisé par le fait que ledit adaptateur d'indice (40) comporte une surface optique d'entrée (42) et une surface optique de sortie (44) de part et d'autre dudit réseau, de manière à permettre d'utiliser les moyens de couplage de modes constitués par ce réseau aussi bien pour l'injection de lumière dans la fibre (18) à travers la surface optique d'entrée que pour l'extraction de lumière à partir de cette fibre à travers la surface optique de sortie.

**Claims**

1. An optical coupling device for an optical fibre (18), applicable to an optical fibre which is constituted by a core surrounded by a cladding with a lower optical index, this device comprising
— mode coupling means (14,16,12) forming alternate bends in a portion of the fibre and this imparting to this portion an undulating form oscillating round an average axis (2), so as to couple modes with high propagation constants which propagate in the core to modes with low propagation constants which propagate in the cladding,

— and an index adapter (3) constituted by a transparent medium whose index is not substantially lower than that of the cladding, in optical contact with the cladding, so as to couple said modes which propagate in the cladding to light which propagates in this transparent medium and which constitutes a set of rays, the rays of this set passing near the axis (2) of the fibre with a distance inferior to the radius of said fibre and this along the whole length of a segment of this axis, this segment being disposed inside the adapter, all rays forming the same predetermined angle with this axis, characterized by the fact that an optical surface (5,32,42,44) of this index adapter ends in a tip of revolution about this axis to provide coupling between this set of rays and a light beam which is parallel to this axis or converges at a point aligned on this axis.

2. A device according to claim 1, characterized by the fact, that said optical surface (5) extends up to a distance from the fibre (18) greater than ten times the diameter of this fibre and that said index adapter (3) has an optical index at least equal to that of the fibre core.

3. A device according to claim 2, characterized by the fact that said optical surface (5) is a diopter which permits the refraction of the light.

4. A device according to claim 3, characterized by the fact that said diopter (5) is in the form of a cone of revolution about said axis (2) so as to transform mutually said set of rays and a light beam which is parallel to this axis.

5. A device according to claim 4, characterized by the fact that it further comprises a converging system (20) outside said index adapter (3) and focussing this parallel beam at a point (22) outside this adapter.

6. A device according to claim 3, characterized by the fact that said diopter (5) is in the form of a surface of revolution obtained by turning an arc of a hyperbola about said axis (2) of the fibre (18), this hyperbola being drawn in a plane which passes through this axis and having an axis of symmetry which, with said axis of the fibre, forms the same angle as the rays of said set of rays, so as to transform mutually this set of rays and a light beam which converges at a point aligned on this axis of the fibre and on said axis of symmetry of the hyperbola.

7. A device according to claim 2, characterized by the fact that said optical surface is a reflecting surface (32) for reflecting light towards the interior of the index adapter (30) and is in the form of a cone of revolution about said axis (2) so as to transform mutually said set of rays and a light beam parallel to this axis and inside this adapter.

8. A device according to claim 7, characterized by the fact that the adapter also has in the way of said parallel interior beam a converging diopter (34) which transforms mutually this interior beam and an exterior converging beam.

9. A device according to claim 8, characterized by the fact that said converging diopter (34) provides the transformation between the interior parallel beam and an exterior converging beam at a point (36) distant from the axis (2) of the fibre (18).

10. A device according to claim 2, characterized by the fact that said means for forming alternate bends comprise two gratings constituted by two regular successions of ridges and of furrows formed respectively on two facing surfaces of said index adapter (14,16), the ridges of one grating facing the furrows of the other, and

— pressure means (12) for pressing the ridges against two opposite sides of the optical fibre,

— means assuring an optical contact between the adapter and the undulating zone of the fibres being provided.

11. A device according to claim 10, applicable to injecting light into the optical fibre (18) and characterized by the fact that said grating extends along the whole length of the zone which receives light from said optical surface (42) and extends downstream beyond this zone.

12. A device according to claim 10, applicable to extracting light from the optical fibre (18) and characterized by the fact that said index adapter (40) comprises an extra output zone about one centimetre long which provides optical contact with a rectilinear portion of the fibre consecutive to said undulating portion which bears against said grating, the axis (2) of this rectilinear portion forming the extension of the average axis (2) of this undulating portion, said optical surface (44) of revolution about this common axis being disposed so as to receive directly light leaving this rectilinear portion and from at least a part of this undulating portion close to this rectilinear portion.

13. A device according to claim 12, characterized by the fact that said index adapter (40) comprises an optical input surface (42) and an optical output surface (44) on either side of said grating so that the mode coupling means constituted by this grating can be used both for injection of light into the fibre (18) through the optical input surface and for extraction of light from the optical output surface.

**Patentansprüche**

1. Koppelvorrichtung für Glasfasern (18), anwendbar auf eine Glasfaser bestehend aus einem Kern umgeben von einer Hülle mit geringerem optischen Index, wobei diese Vorrichtung

— Moduskoppelmittel (14,16,12), die abwechselnde Krümmungen in einem Teil der Faser hervorrufen und so diesem Teil eine gewellte Form geben, die um eine Mittelachse (2) schwingt, um so Modi mit starken Ausbreitungskonstanten, die sich im Kern ausbreiten, mit Modi mit schwachen Ausbreitungskonstanten, die sich in der Hülle ausbreiten, zu koppeln,

— und einen Indexadapter (3) aufweist, der aus einem transparenten Milieu besteht, dessen Index nicht wesentlich niedriger als der der Hülle ist und der in optischem Kontakt mit der Hülle steht, um so die Modi, die sich in der Hülle ausbreiten, mit Licht zu koppeln, das sich in diesem transparenten Milieu ausbreitet und ein Strahlenbündel bildet, wobei die Strahlen dieses Bündels nahe an der Achse (2) der Faser mit einem Abstand geringer als dem Faserradius vorbeilaufen, und dies über die ganze Länge eines Segments dieser Achse, wobei dieses Segment sich im Inneren des Adapters befindet und die Strahlen alle den gleichen vorbestimmten Winkel mit dieser Achse bilden, dadurch gekennzeichnet, daß eine optische Oberfläche (5,32,42,44) dieses Indexadapters eine zugespitzte Drehkörperform um diese Achse aufweist, um die Kopplung zwischen diesem Strahlenbündel und einem Lichtstrahl zu ermöglichen, der parallel zu dieser Achse oder auf einen Fluchtpunkt dieser Achse konvergierend verläuft.

2. Vorrichtung nach Anspruch 1, dadurch gekennzeichnet, daß die optische Oberfläche (5) sich bis zu einer Entfernung von der Faser (18) erstreckt, die größer als der zehnfache Durchmesser dieser Faser ist, und daß der Indexadapter (3) einen optischen Index aufweist, der mindestens gleich dem des Faserkerns ist.

3. Vorrichtung nach Anspruch 2, dadurch gekennzeichnet, daß die optische Oberfläche (5) ein Diopter ist, der die Brechung des Lichts ermöglicht.

4. Vorrichtung nach Anspruch 3, dadurch gekennzeichnet, daß der Diopter (5) einen zur Achse (2) konzentrischen Drehkegel bildet, so daß er eine wechselseitige Transformation zwischen dem genannten Strahlenbündel und einem zu dieser Achse parallelen Strahlenbündel sichert.

5. Vorrichtung nach Anspruch 4, dadurch gekennzeichnet, daß außerdem ein außerhalb des Indexadapters (3) liegendes Konvergenzsystem (20) vorgesehen ist, das die Konzentrierung dieses parallelen Strahlenbündels in einem Brennpunkt (22) außerhalb dieses Adapters bewirkt.

6. Vorrichtung nach Anspruch 3, dadurch gekennzeichnet, daß der Diopter (5) ein Drehkörper ist, der durch Drehung eines Hyperbelbogens um die Achse (2) der Faser (18) entsteht, wobei diese Hyperbel in einer Ebene liegt, die die Achse einschließt, und eine Symmetrieachse aufweist, die mit der Faserachse denselben Winkel wie die Strahlen des genannten Strahlenbündels einschließt, so daß eine wechselseitige Transformation zwischen diesem Strahlenbündel und einem auf einen Brennpunkt, der sich auf der Faserachse und der Symmetrieachse der Hyperbel befindet, konvergierenden Strahlenbündel gesichert ist.

7. Vorrichtung nach Anspruch 2, dadurch gekennzeichnet, daß die optische Oberfläche eine Spiegelfläche (32) ist, an der das Licht in das Innere des Indexadapters (30) zurückreflektiert wird und die die Form eines kegelförmigen Drehkörpers um die Achse (2) besitzt, so daß die wechselseitige Transformation zwischen dem genannten Strahlenbündel und einem zu dieser Achse parallelen Strahlenbündel innerhalb des Adapters gesichert ist.

8. Vorrichtung nach Anspruch 7, dadurch gekennzeichnet, daß der Adapter außerdem auf dem Weg des parallelen inneren Strahlenbündels einen konvergierenden Diopter (34) aufweist, der die wechselseitige Transformation zwischen diesem parallelen inneren Strahlenbündel und einem äußeren konvergierenden Strahlenbündel herstellt.

9. Vorrichtung nach Anspruch 8, dadurch gekennzeichnet, daß der konvergierende Diopter (34) die Transformation zwischen dem inneren parallelen Strahlenbündel und einem äußeren, in einem von der Achse (2) der Faser (18) einen Abstand aufweisenden Punkt (36) konvergierenden äußeren Bündel herstellt.

10. Vorrichtung nach Anspruch 2, dadurch gekennzeichnet daß die Modus-Koppolmittel, die abwechselnde Krümmungen in der Faser hervorrufen, zwei Netze aufweisen, die aus zwei regelmäßigen Folgen von Vertiefungen und Erhöhungen in zwei einander gegenüberliegenden Flächen des Indexadapters (14,16) bestehen, wobei die Erhöhungen des einen Netzes den Vertiefungen des anderen Netzes gegenüberliegen,

— und Druckmittel aufweisen, um die Vorsprünge gegen zwei einander gegenüberliegende Seiten der Glasfaser zu drücken,

— wobei Mittel vorgesehen sind, um einen optischen Kontakt zwischen dem Adapter und der gewellten Faserzone herzustellen.

11. Vorrichtung nach Anspruch 10 in Anwendung auf die Einspeisung von Licht in die Glasfaser (18), dadurch gekennzeichnet, daß sich das Netz über die ganze Länge der dem Licht ausgesetzten Zone ausgehend von der genannten optischen Oberfläche (42) bis in einen Bereich jenseits dieser Zone erstreckt.

12. Vorrichtung nach Anspruch 10 in Anwendung auf die Entnahme von Licht aus der Glasfaser (18), dadurch gekennzeichnet, daß der Indexadapter (40) eine zusätzliche Ausgangszone von mindestens einem Zentimeter Länge aufweist, wodurch ein optischer Kontakt mit dem geradlinigen Bereich der Faser im Anschluß an den gewellten Bereich in Kontakt mit dem Netz erreicht wird, wobei die Achse (2) dieses geradlinigen Bereichs die Verlängerung der mittleren Achse (2) des gewellten Bereichs bildet und die optische Oberfläche (44) in Form eines Drehkörpers um diese gemeinsame Achse so angeordnet ist, daß sie unmittelbar von dem aus dem geradlinigen Bereich und mindestens einem Teil des diesem geradlinigen Bereich benachbarten gewellten Bereich austretenden Licht getroffen wird.

13. Vorrichtung nach Anspruch 12, dadurch gekennzeichnet, daß der Indexadapter (40) eine optische Eingangsoberfläche (42) und eine optische Ausgangsoberfläche (44) auf der einen bzw. der anderen Seite des Netzes besitzt, so daß die aus dem Netz gebildeten Modus-Koppelmittel sowohl für die Einkopplung von Licht in die Faser (18) über die optische Eingangsoberfläche als auch für die Auskopplung von Licht aus der Faser über die optische Ausgangsoberfläche benutzt werden können.

# FIG.1

# FIG.2

# FIG.3

# FIG.4

# FIG.5

# FIG.6

# FIG.7